# EUROPEAN PATENT SPECIFICATION

(11) **EP 2 974 125 B1**
(45) Date of publication and mention of the grant of the patent: **24.04.2019**
(21) Application number: 13878225.5
(22) Date of filing: 14.03.2013
(51) Int. Cl.: H04L 29/08

(54) **SYSTEMS, METHODS, AND COMPUTER PROGRAM PRODUCTS FOR PROVIDING A UNIVERSAL PERSISTENCE CLOUD SERVICE**
SYSTEME, VERFAHREN UND COMPUTERPROGRAMMPRODUKTE ZUR BEREITSTELLUNG EINES DAUERHAFTEN UNIVERSELLEN CLOUD-DIENSTES
SYSTÈMES, PROCÉDÉS ET PRODUITS PROGRAMME D'ORDINATEUR POUR FOURNIR UN SERVICE EN NUAGE DE PERSISTANCE UNIVERSEL

(43) Date of publication of application: 20.01.2016
(73) Proprietor: Intel Corporation, Santa Clara, CA 95054 (US)
(72) Inventor: SATAPATHY, Jiphun C., Portland, Oregon 97229 (US); MIRASHRAFI, Mojtaba, Portland, Oregon 97231 (US); PRAKASH, Gyan, Beaverton, Oregon 97006 (US); HAZRA, Mousumi M., Beaverton, Oregon 97007 (US)
(74) Representative: Maiwald Patent- und Rechtsanwaltsgesellschaft mbH
(86) International application number: PCT/US2013/031386
(87) International publication number: WO 2014/142883

(56) References cited:
- US-A1- 2007 275 745
- US-A1- 2012 178 476
- US-A1- 2012 190 327
- US-A1- 2012 198 268
- US-A1- 2012 203 862
- US-A1- 2012 330 711
- US-A1- 2013 052 991
- US-A1- 2013 052 991
- US-A1- 2013 060 842

## Description

### TECHNICAL FIELD

Embodiments described herein generally relate to managing information as a cloud service over a network.

### BACKGROUND

Client devices, such as personal computers, tablets, smartphones, cameras, e-readers, gaming consoles, and the like, that may use a cloud-based service are typically a part of a client-server model to provide the end-to-end experience. In this model, a client side component communicates with a server side component to provide the service. The persistence of the client device information can be stored at the server, at the client device, or at both the server and the client device. To ensure that the device information is identical at both the server and the client device, the server and the client device need to periodically communicate, typically via software components at each end. Client devices may be used as dummy consoles to experience services because all of the information can be stored at the server end or in the cloud. This model is convenient in that a user can use any device to consume a service with proper authentication. In this model, the information retained at the servers is specific to a particular service's usage and is controlled and maintained separately by each service provider.

US 2013/052 991 A1 discloses a method and system to receive status information from a mobile device and make this status information available to a user via a cloud-based service, so that the information can be accessed and the mobile device can be controlled without the user having to be near the mobile device.

US 2012/178 476 A1 discloses a system and method to keep track of the last known location of a lost or stolen mobile device, so as to give the owner an indication as to where he may find the mobile device even if the mobile device can no longer be contacted via the network at the moment where the user discovers it is missing.

US 2007/275 745 A1 discloses a system and method for managing mobile device communication in an enterprise. Contact information is collected and kept up-to-date at a central synchronization server in the enterprise, so that, e.g., everybody knows the new phone number to call when the device is using a different SIM card to roam in another network.

US 2012/190 327 A1 discloses a location based service and method configured to provide recovery assistance for a misplaced or stolen mobile device. The method includes leveraging location fixes performed for other network services to drive a recovery process for a mobile device, thereby reducing unnecessary usage of the location platform.

### SUMMARY OF THE INVENTION

The invention provides a method of providing a persistence cloud service, PCS, to registered services, comprising:
receiving, by a PCS server, from a first computing device associated with a first service registered with the persistence cloud service, a client device update for a client device registered with the persistence cloud service, wherein the update indicates that the client device has had suspicious login activity, wherein a suspicious login activity indicates that the login procedure by a user of the client device into the first service took multiple incorrect passwords;
updating, by the PCS server, client device persistence information associated with the client device based on the client device update, wherein the client device persistence information includes an indication that activity at the client device is suspicious;
receiving, by the PCS server, from a second computing device associated with a second service registered with the persistence cloud service, a request for the client device persistence information, wherein the request includes an affiliate identifier that identifies the second service;
verifying, by the PCS server and based on the provided affiliate identifier, that the second service is registered with the persistence cloud service, PCS; and
providing, by the PCS server, the client device persistence information to the second computing device;
determining, by the second computing device, a level of service to be provided to the client device that is based on the client device persistence information provided by the PCS server, wherein the level of service includes invoking further security actions, and wherein invoking further security actions includes locking the client device; and
providing, by the second computing device, the determined level of service to the client device.

### BRIEF DESCRIPTION OF THE DRAWINGS/FIGURES

FIGs. 1 and 2 each illustrate an exemplary block diagram of the system described herein, according to embodiments described herein.
FIG. 3 is a sequence diagram illustrating an exemplary process flow for registering a client device with the persistence cloud service described herein, according to an embodiment.
FIG. 4 illustrates an exemplary record of data associated with persistence information for a particular device, according to an embodiment.
FIG. 5 is a sequence diagram illustrating an exemplary process flow for providing client device persistence information from the persistence cloud service described herein, according to an embodiment.
FIG. 6 is a sequence diagram illustrating an exemplary process flow for providing client device persistence information to a router device from the persistence cloud service described herein, according to an embodiment.
FIG. 7 is a flow chart illustrating an exemplary process flow of the system described herein, from the perspective of a service registered with the persistence cloud service, according to an embodiment.
FIG. 8 is a flow chart illustrating an exemplary process flow for registering a client device with the persistence cloud service described herein, from the perspective of a service registered with the persistence cloud service, according to an embodiment.
FIG. 9 is a flow chart illustrating an exemplary process flow for updating the persistence cloud service described herein, from the perspective of a service registered with the persistence cloud service, according to an embodiment.
FIG. 10 is a flow chart illustrating an exemplary process flow of the system described herein, from the perspective of a persistence cloud service server, according to an embodiment.
FIG. 11 is a flow chart illustrating an exemplary process flow for registering a client device with the persistence cloud service described herein, from the perspective of a persistence cloud service server, according to an embodiment.
FIG. 12 is a block diagram of an example persistence cloud server, according to an embodiment.
FIG. 13 is a block diagram of an example registered service device, according to an embodiment.
FIG. 14 is a block diagram of an example client device, according to an embodiment.

In the drawings, the leftmost digit(s) of a reference number may identify the drawing in which the reference number first appears.

### DETAILED DESCRIPTION

As discussed above, client devices that may use a cloud-based service are typically a part of a client-server model to provide the end-to-end experience. In this model, a client side component communicates with a server side component to provide the service. The persistence of the client device information can be stored at the server, at the client device, or at both the server and the client device. To ensure that the device information is identical at both the server and the client device, the server and the client device need to periodically communicate, typically via software components at each end. One downside to this model of information persistence is that, if the client side software component is removed from the client device, the communication between the client and the server is interrupted and it becomes difficult to maintain information persistence at the client side.

The above may not be a concern if the client devices are used as dummy consoles to experience services because all of the information can be stored at the server end or in the cloud. This model is convenient in that a user can use any device to consume a service with proper authentication. However, in this model, the information retained at the servers is specific to a particular service's usage and is controlled and maintained separately by each service provider.

Currently, there is no single cloud persistence service that can provide a mechanism to maintain universal device information and provide device-specific information to any service that may need it. For example, there is currently no single cloud persistence service that can obtain information from one service indicating that there may be a particular activity or state associated with a particular device (e.g., peculiar or suspicious activity, a state of being lost or stolen, etc.) and be able to alert other services so that those other services can proceed as appropriate for usage of their services by that particular device.

Disclosed herein are methods, systems, and computer program products that solve the technical problem of how to manage device persistence information in a universally centralized manner for sharing with registered services.

Embodiments are now described with reference to the figures, where like reference numbers may indicate identical or functionally similar elements. While specific configurations and arrangements are discussed, it should be understood that this is done for illustrative purposes only. A person skilled in the relevant art will recognize that other configurations and arrangements can be used without departing from the spirit and scope of the description. It will be apparent to a person skilled in the relevant art that this can also be employed in a variety of other systems and applications other than what is described herein.

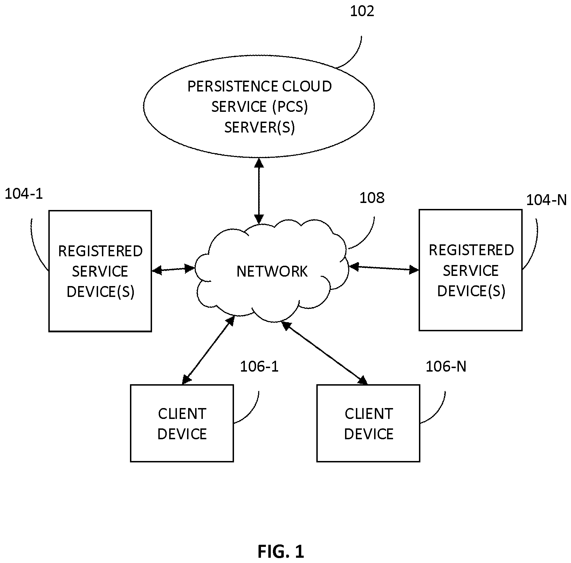

FIG. 1 illustrates an exemplary block diagram 100 of a persistence cloud service (PCS) system, according to an embodiment. The PCS system may include a PCS server 102, one or more registered service devices 104-1 to 104-N (collectively, 104), and one or more client devices (e.g., user devices) 106-1 to 106-N (collectively, 106), in communication via a network 108. The persistence cloud service may be implemented in software and/or hardware executed or controlled by a controller of the PCS server 102. While only one PCS server is illustrated for clarity and ease of discussion, it should be appreciated that the persistence cloud service may be hosted by multiple distributed server computers for redundancy and/or load sharing, for example.

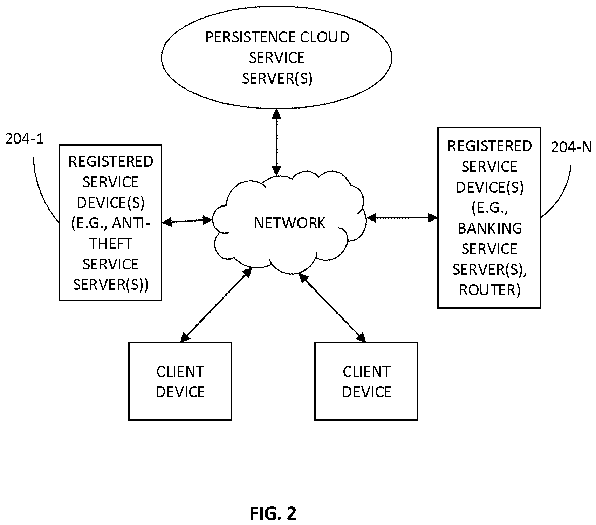

The registered service devices 104 may be computing devices that may include, for example, web-based service servers that allow users to log in to consume those services. Such web-based services may include, but are not to be limited to, for example, banking services, social networking services, gaming services, shopping services, anti-theft services, anti-virus services, data backup services, data storage services, etc., some of which are shown as registered service devices 204 in FIG. 2. The registered service devices 104/204 may also include routers used for routing network traffic, as discussed in further detail herein.

The client devices 106 may be computing devices that may include, but are not to be limited to, for example, personal computers (PCs), laptop computers, ultra-laptop computers, tablets, touch pads, portable computers, handheld computers, palmtop computers, personal digital assistants (PDAs), e-readers, cellular telephones, combination cellular telephone/PDAs, televisions, smart devices (e.g., smart phones, smart tablets or smart televisions), mobile internet devices (MIDs), messaging devices, data communication devices, media playing devices, cameras, gaming consoles, etc. The client devices 106 may include controllers and other components that execute software and/or control hardware in order to consume services provided by registered service devices 104, for example, over a network. For example, the client devices 106 may include one or more software clients for accessing web-based services provided by one or more of the registered service devices 104. The client devices 106 may also, or instead, include a web interface running in a browser from which the client device can access such web-based services.

The network 108 may be any wired or wireless network, such as a Wide Area Network (WAN), a Local Area Network (LAN), and/or the like. As an example, the network 108 may be a distributed public network, such as the Internet, where the PCS server 102, the registered services 104, and the client devices 106 are connected to the network via wired or wireless connections.

According to an embodiment, service providers of the services that wish to subscribe to the persistence cloud service may register with the persistence cloud service in advance so that the persistence cloud service will be aware of what services (and, for example, what addresses of those services) to which device persistence information should be provided and also what services from which to expect device persistence information updates, as will be described in further detail below. The registered service devices 104 may each require an application program interface (API) in order to communicate with the PCS server 102. Data communication between registered service devices 104 and the PCS server 102 may be executed in any manner as would be appreciated by those skilled in the art (e.g., standard server to server communications may be used). Registering of client devices that use such registered services will now be discussed.

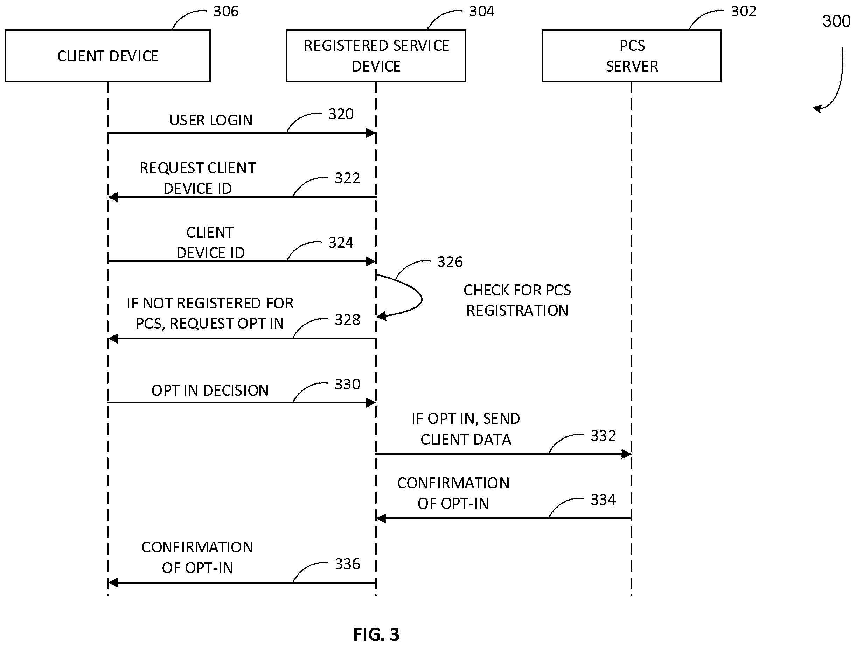

FIG. 3 is a sequence diagram 300 illustrating an exemplary process flow for registering a client device with the persistence cloud service described herein, according to an embodiment. A user of client device 306 may log into (320) a registered service (e.g., a banking service or a social networking service) hosted by registered service device 304 via, for example, client software running on client device 306 or a web-based client running in a browser on client device 306. Registered service device 304 may request a client device ID from client device 306 (322), and client device 306 may provide the client device ID to the registered service device 304 (324). Alternatively, the client device ID may have been included during login 320. The registered service device 304 may check to see if the device associated with the provided client device ID had previously opted into the persistence cloud service with respect to its associated registered service (326). If the client device associated with the client device ID had not previously opted into the persistence cloud service, the registered service device 304 may send a request to the client device 306 asking the user of client device 306 whether he or she wants to register client device 306 with the persistence cloud service with respect to this particular registered service (328). Client device 306 may send an opt-in decision to the registered service device 304 (330). If the decision was to opt in to the persistence cloud service, the registered service device 304 may provide client device data (e.g., registration data) associated with the client device ID to PCS server 302 (332), and may also store associated client device and/or registration data itself such that it will know that the device associated with that client device ID has already been registered with the persistence cloud service. The PCS server 302 may send confirmation of receipt of the client device opt-in data to the registered service device 304 (334). The registered service device 304 may send confirmation of the opt-in to the client device 306 (336).

According to an embodiment, the client device registration data provided to the PCS server 302 by the registered service device 304 may include, for example, the client device ID, client device status information, an affiliate ID, and an affiliate policy. The client device ID may, for example, be (or be based on or derived from) a unique hardware identifier of the client device 306, such as the Media Access Control (MAC) address of the client device 306, or any other identifier for the client device 306. Client device status information may be any information that would appropriately indicate a status of the client device 306 with respect to the particular registered service providing the information. For example, the client device status information may likely be some type of "normal" indication upon initial registration of the client device 306. The affiliate ID may be a unique identifier for the registered service that is sending the information. The affiliate policy may include a policy to be followed by the persistence cloud service based on a current client device status. For example, the affiliate policy may include instructions pertaining to how the persistence cloud service should update the client device status at the PCS server 302 based on a later client device update from the registered service device 304. The affiliate policy may also include instructions pertaining to what information to include as the client device persistence information provided to the registered service device 304 based on the current client device status at the PCS server 302.

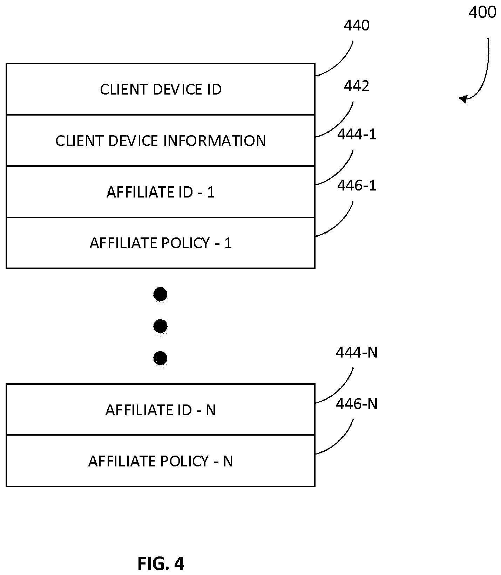

FIG. 4 illustrates an exemplary record of data 400 associated with persistence information for a particular client device, according to an embodiment. This exemplary record of data may be stored at the PCS server 102/302, for example, for each registered client device 106/306. The record of data 400 may include a client device ID 440 (e.g., a MAC address of the client device 106/306), client device information 442, and affiliate IDs 444-1 to 444-N and affiliate policies 446-1 to 446-N of the registered services with which the client device 106/306 has been registered for use with the persistence cloud service.

The client device information (or persistence information) 442 may be any information indicating a current status of the client device 106/306. For example, client device information 442 may include, but is not to be limited to, an indication that the client device is in a normal state, an indication that the client device has been lost or stolen, an indication that activity (e.g., login activity) at the client device is suspicious, an indication that usage of the client device should follow a defined set of policies, and/or an indication of a location of the client device. Other client device information or statuses may also be contemplated. The client device information 442 maintained by the PCS server 102/302 may be dependent upon updates that the PCS server 102/302 receives from the registered service devices 104/304 for a particular client device. The updates may depend upon the particular service provided by a registered service, as discussed in more detail below.

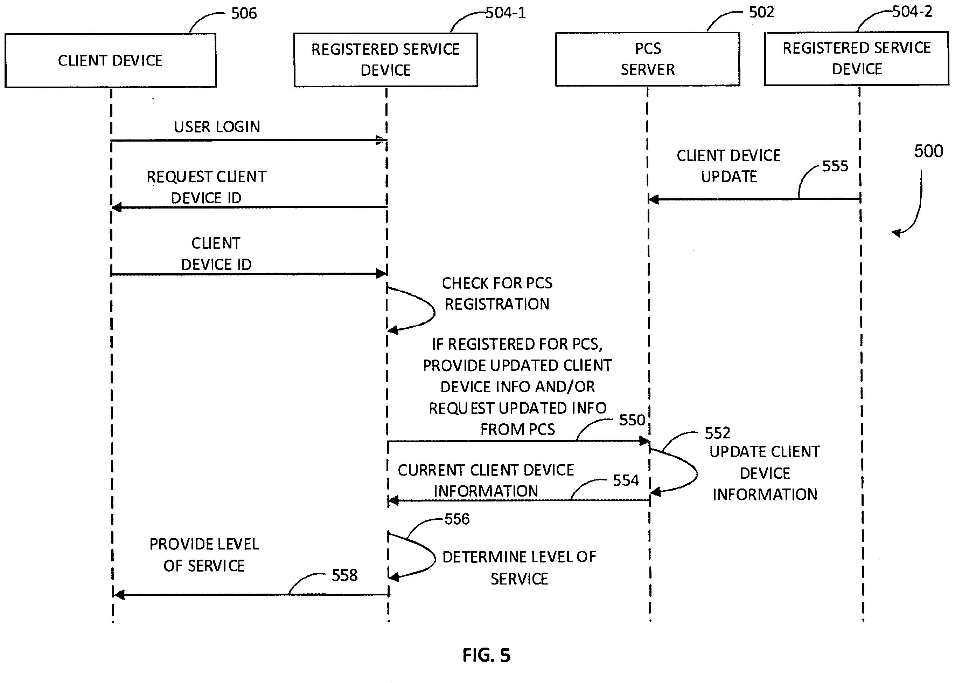

FIG. 5 is a sequence diagram 500 illustrating an exemplary process flow for providing client device persistence information from the persistence cloud service described herein, according to an embodiment. The initial login sequence shown in FIG. 5 is similar to that shown in FIG. 3. If, however, it is determined that client device 506 is already registered for the persistence cloud service with respect to the registered service associated with registered service device 504-1, registered service device 504-1 may send updated client device information with respect to client device 506 to the PCS server 502 and/or may request current client device information with respect to client device 506 from PCS server 502 (550). For example, if the login into the registered service is normal, then the registered service device 504-1 may indicate that to PCS server 502 and request current client device information from PCS server 502 in order to determine how to proceed with its service at the client device 506. If, however, the login procedure took multiple incorrect passwords before a correct password was achieved (if at all), the registered service device 504-1 may indicate to the PCS server 502 that there was "suspicious activity" at client device 506. In its update or request for current client device information, the registered service device 504-1 may include its affiliate ID to identify the registered service device 504-1 to the PCS service. In an embodiment, the PCS server 502 may verify, based on the provided affiliate ID, that the service associated with the registered service device 504-1 is indeed registered with the persistence cloud service. The PCS server 502 may update the client device information in its data record for client device 506 based on the update provided by the registered service device 504-1 (552). The PCS server 502 may send current client device information to the registered service device 504-1 (554). For example, if another registered service device 504-2 had previously sent an update to the PCS server 502 that indicated, for example, that the client device 506 has had suspicious login activity, or had been reported as lost or stolen, or had been reported as having some other type of warning or non-normal status (555), the current client device information sent by PCS server 502 to registered service device 504-1 would indicate that information. Otherwise, the current client device information sent by PCS server 502 would indicate that the current client device status is normal.

Registered service device 504-1 may determine a level of service to be provided to client device 506 that is based on the current client device information provided by the PCS server 502 (556). Registered service device 504-1 may send an indication of the determined level of service to client device 506 (558). According to an embodiment, the level of service may include, but is not to be limited to, allowing full access to the registered service, denying access to the registered service, providing limited access to the registered service, and/or invoking further security actions. Other levels of service may also be contemplated. For example, if the current client device information indicates that there has been recent "suspicious activity" at client device 506, the registered service may invoke further security actions at client device 506 first, then may decide what level of access to provide (e.g., full, limited, or none) at client device 506. Invoking further security actions may include, but not be limited to, for example, executing further authentication checks, locking accounts associated with the registered service, locking client device 506, and/or deleting data from client device 506. Other further security actions may also be contemplated. In another example, if the current device information indicates that client device 506 has been reported lost or stolen, the registered service may immediately limit or deny access to the registered service at the client device 506. Limiting access to the registered service may include, but not be limited to, for example, limiting types of actions that can be conducted, limiting quantities involved in actions that can be conducted, and/or limiting a local area in which actions can be conducted. Other types of limiting access may also be contemplated. Following the banking service example, limiting types of actions that can be conducted may include, for example, allowing deposits but not withdrawals; limiting quantities may include, for example, allowing only small denomination transactions and/or limiting the number of transactions; and limiting a local area in which actions can be conducted may include, for example, allowing transactions only if the device is located within a defined radius of the rightful user's local bank.

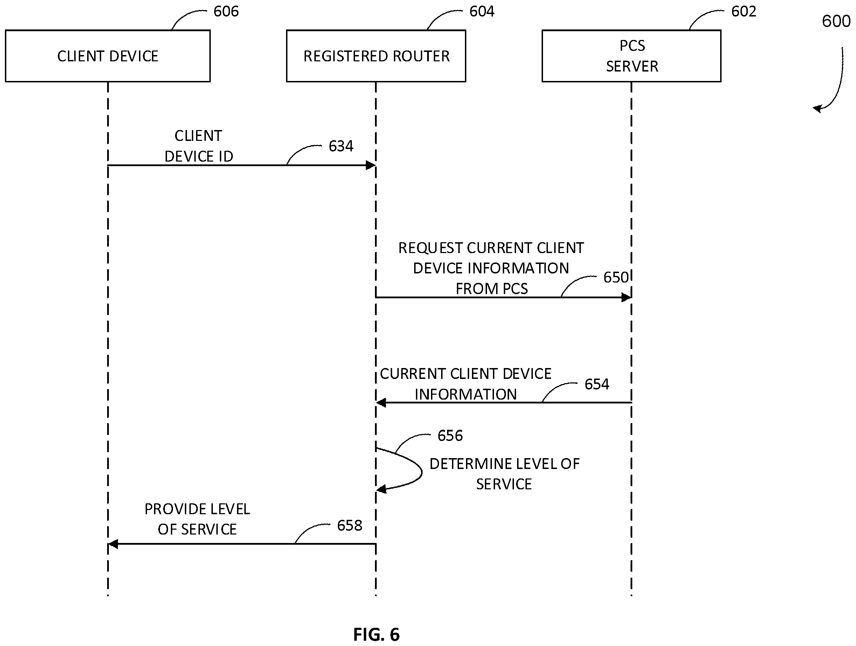

FIG. 6 is a sequence diagram illustrating an exemplary process flow 600 for providing client device persistence information to a router device from the persistence cloud service described herein, according to an embodiment. A router is a device that determines the next network point to which a data packet should be forwarded. A registered service device, such as registered service device 504 discussed above, may be a router. When a client device 606 accesses a registered router 604 in order to access a network, a client device ID of the client device 606 may be sent to registered router 604 (634). Registered router 604 may send a request to the PCS server 602 for current client device information (650). In its request, router 604 may provide a router identifier that identifies the router to the PCS service. PCS server 602 may send the current client device information to registered router 604 (654). The current client device information may include a device status assigned to the device, such as, for example, an indication that the client device is in a normal state, an indication that the client device has been lost or stolen, an indication that activity at the client device is suspicious, an indication that usage of the client device should follow a defined set of policies, and/or an indication of a location of the client device, etc. Other current client device information or statuses may also be contemplated. Registered router 604 may determine a level of service to provide to client device 606 based on the received current device information (656). Registered router 604 may provide the determined level of service to client device 606 (658). The levels of service that the router may provide may include, for example, allowing full network access, denying network access, providing limited network access, and/or invoking further security actions, etc. Other levels of service may also be contemplated.

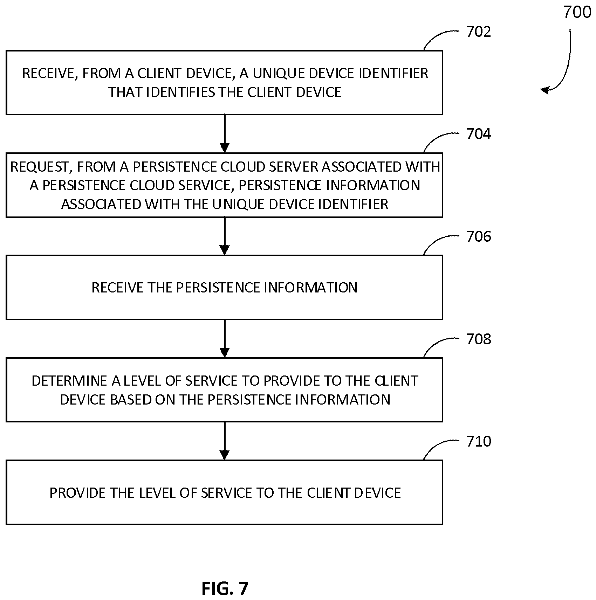

FIG. 7 is a flow chart illustrating an exemplary process flow 700 of the system described herein, from the perspective of a service registered with the persistence cloud service, according to an embodiment. At 702, a registered service device receives, from a client device, a device identifier that identifies the client device to the registered service. This may be received, for example, when a user at a client device logs into the registered service, or may alternatively be requested by the registered service device after login. At 704, the registered service device requests, from a server associated with a persistence cloud service, current client device persistence information associated with the device identifier. At 706, the registered service device receives the current client device persistence information from the PCS server. As discussed above, the client device information, or persistence information, may be any information indicating a current status of the client device. At 708, the registered service device may determine a level of service to provide to the client device based on the persistence information. At 710, the registered service device may provide the determined level of service to the client device. As discussed above, the levels of service may include, for example, allowing full access to the registered service, denying access to the registered service, providing limited access to the registered service, and/or invoking further security actions, etc.

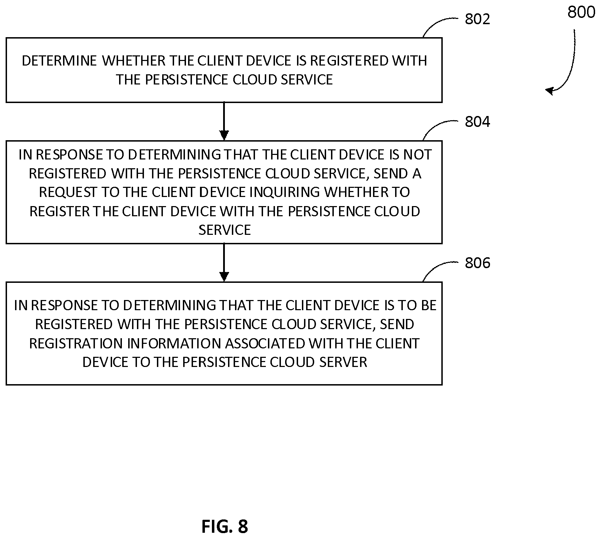

FIG. 8 is a flow chart illustrating an exemplary process flow 800 for registering a client device with the persistence cloud service described herein, from the perspective of a service registered with the persistence cloud service, according to an embodiment. Upon login to a registered service via a client device, the registered service device may, at 802, determine whether the client device is registered with the persistence cloud service with respect to the registered service. At 804, in response to determining that the client device is not registered with the persistence cloud service, the registered service device may send a request to the client device inquiring whether to register the client device with the persistence cloud service. At 806, in response to determining that the client device is to be registered with the persistence cloud service, the registered service device may send registration information associated with the client device to the PCS server. As discussed above, the registration information may include, for example, a client device ID of the client device, client device status information, an affiliate ID that identifies the registered service, and an associated affiliate policy.

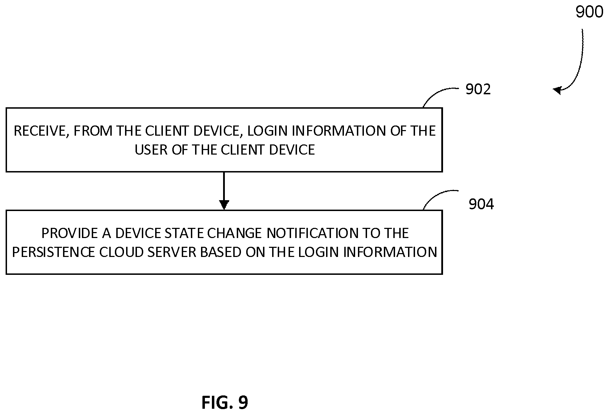

FIG. 9 is a flow chart illustrating an exemplary process flow 900 for updating the persistence cloud service described herein, from the perspective of a service registered with the persistence cloud service, according to an embodiment. During login to a registered service via a client device, the registered service device may, at 902, receive, from the client device, login information of the user of the client device. At 904, the registered service device may provide a client device state change notification or update to the PCS server based on the login information. As discussed above, the client device state change update may include any information that would appropriately indicate a status of the client device with respect to the particular registered service providing the information. For example, the client device state change update my indicate, for example, that the client device is in a normal state, that the client device has been lost or stolen, that activity (e.g., login activity) at the client device is suspicious, that usage of the client device should follow a defined set of policies, and/or an indication of a location of the client device, etc.

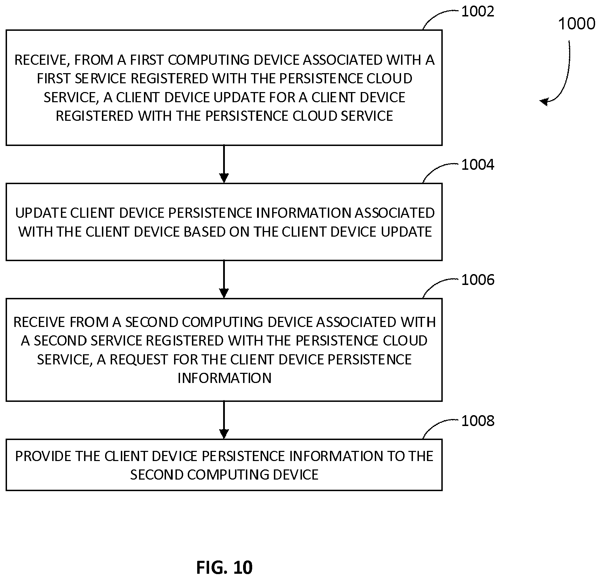

FIG. 10 is a flow chart illustrating an exemplary process flow 1000 of the system described herein, from the perspective of a PCS server, according to an embodiment. At 1002, the PCS server may receive, from a first computing device associated with a first service registered with the persistence cloud service, a client device update for a client device registered with the persistence cloud service. At 1004, the PCS server may update client device persistence information associated with the client device based on the client device update. At 1006, the PCS server may receive from a second computing device associated with a second service registered with the persistence cloud service, a request for the client device persistence information. At 1008, the PCS server may provide the client device persistence information to the second computing device.

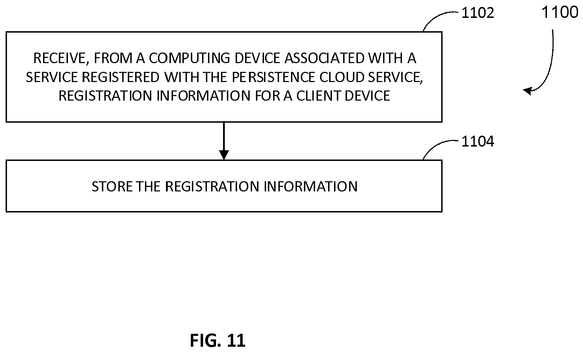

FIG. 11 is a flow chart illustrating an exemplary process flow 1100 for registering a client device with the persistence cloud service described herein, from the perspective of a PCS server, according to an embodiment. At 1102, the PCS server may receive, from a computing device associated with a service registered with the persistence cloud service, registration information for a client device. At 1104, the PCS server may store the registration information.

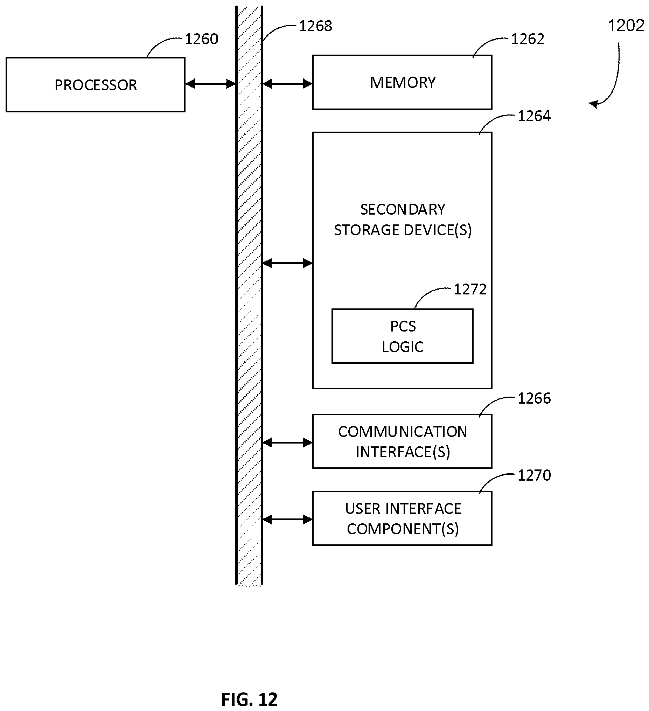

FIG. 12 is a block diagram of an example PCS server 1202, according to an embodiment. The PCS server 1202 may represent, for example, the PCS server 102, 302, 502, or 602 of FIGs. 1, 3, 5, or 6, respectively. As illustrated, the PCS server 1202 may include a processor or controller 1260 connected to memory 1262, one or more secondary storage devices 1264, and a communication interface 1266 by a bus 1268 or similar mechanism. The PCS server 1202 may optionally include user interface components 1270 for use by a system administrator, for example, that may include, for example, a touchscreen, a display, one or more user input components (e.g., a keyboard, a mouse, etc.), a speaker, or the like, or any combination thereof. Note, however, that while not shown, PCS server 1202 may include additional components. The processor 1260 may be a microprocessor, digital ASIC, FPGA, or similar hardware device. In an embodiment, the processor 1260 may be a microprocessor, and software may be stored or loaded into the memory 1262 for execution by the processor 1260 to provide the functions described herein. The one or more secondary storage devices 1264 may be, for example, one or more hard drives or the like, and may store logic 1272 to be executed by the processor 1260. The communication interface 1266 may be implemented in hardware or a combination of hardware and software. The communication interface 1266 may provide a wired or wireless network interface to a network, such as the network 108 shown in FIG. 1.

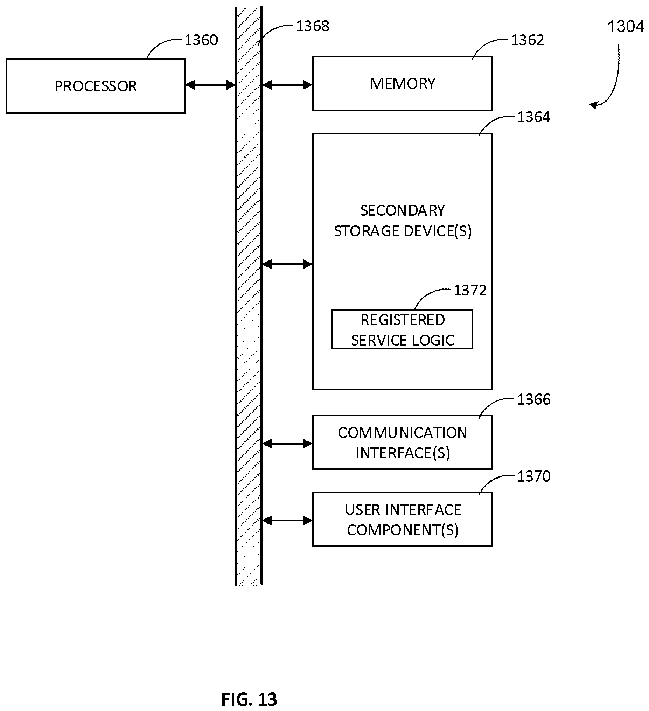

FIG. 13 is a block diagram of an example registered service device 1304, according to an embodiment. The registered service device 1304 may represent, for example, any of the registered service devices 104, 204, 304, 504, or 604 of FIGs. 1, 2, 3, 5, or 6, respectively. As illustrated, the registered service device 1304 may include a processor or controller 1360 connected to memory 1362, one or more secondary storage devices 1364, and a communication interface 1366 by a bus 1368 or similar mechanism. The registered service device 1304 may optionally include user interface components 1370 for use by a system administrator, for example, that may include, for example, a touchscreen, a display, one or more user input components (e.g., a keyboard, a mouse, etc.), a speaker, or the like, or any combination thereof. Note, however, that while not shown, registered service device 1304 may include additional components. The processor 1360 may be a microprocessor, digital ASIC, FPGA, or similar hardware device. In an embodiment, the processor 1360 may be a microprocessor, and software may be stored or loaded into the memory 1362 for execution by the processor 1360 to provide the functions described herein. The one or more secondary storage devices 1364 may be, for example, one or more hard drives or the like, and may store logic 1372 to be executed by the processor 1360. The communication interface 1366 may be implemented in hardware or a combination of hardware and software. The communication interface 1366 may provide a wired or wireless network interface to a network, such as the network 108 shown in FIG. 1.

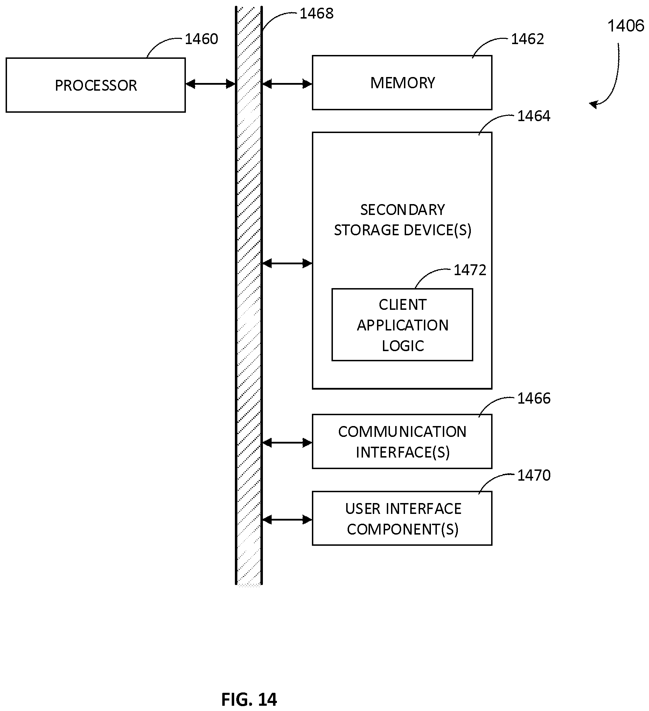

FIG. 14 is a block diagram of an example client device 1406, according to an embodiment. The client device 1406 may represent, for example, the client device 106, 306, 506, or 606 of FIGs. 1, 3, 5, or 6, respectively. As illustrated, the client device 1406 may include a processor or controller 1460 connected to memory 1462, one or more secondary storage devices 1464, and a communication interface 1466 by a bus 1468 or similar mechanism. The client device 1406 may also include user interface components 1470 for use by a user of the client device, for example, that may include, for example, a touchscreen, a display, one or more user input components (e.g., a keyboard, a mouse, etc.), a speaker, or the like, or any combination thereof. Note, however, that while not shown, client device 1406 may include additional components. The processor 1460 may be a microprocessor, digital ASIC, FPGA, or similar hardware device. In an embodiment, the processor 1460 may be a microprocessor, and software may be stored or loaded into the memory 1462 for execution by the processor 1460 to provide the functions described herein. The one or more secondary storage devices 1464 may be, for example, one or more hard drives or the like, and may store logic 1472 to be executed by the processor 1460. The communication interface 1466 may be implemented in hardware or a combination of hardware and software. The communication interface 1466 may provide a wired or wireless network interface to a network, such as the network 108 shown in FIG. 1.

Methods and systems are disclosed herein with the aid of functional building blocks illustrating functions, features, and relationships thereof. At least some of the boundaries of these functional building blocks have been arbitrarily defined herein for the convenience of the description. Alternate boundaries may be defined so long as the specified functions and relationships thereof are appropriately performed. While various embodiments are disclosed herein, it should be understood that they are presented as examples. The scope of the claims should not be limited by any of the example embodiments disclosed herein.

As discussed above, one or more features disclosed herein may be implemented in hardware, software, firmware, and combinations thereof, including discrete and integrated circuit logic, application specific integrated circuit (ASIC) logic, and microcontrollers, and may be implemented as part of a domain-specific integrated circuit package, or a combination of integrated circuit packages. The terms software and firmware, as used herein, refer to a computer program product including at least one computer readable medium having computer program logic, such as computer-executable instructions, stored therein to cause a computer system to perform one or more features and/or combinations of features disclosed herein. The computer readable medium may be transitory or non-transitory. An example of a transitory computer readable medium may be a digital signal transmitted over a radio frequency or over an electrical conductor, through a local or wide area network, or through a network such as the Internet. An example of a non-transitory computer readable medium may be a compact disk, a flash memory, or other data storage device.

As used in this application and in the claims, a list of items joined by the term "one or more of' can mean any combination of the listed terms. For example, the phrases "one or more of A, B or C" can mean A; B; C; A and B; A and C; B and C; or A, B and C."

The systems, methods, and computer program products described herein have an advantage of providing a universally centralized alert system that may provide immediate seamless protection for both client device users and virtually any services consumed by those users against improprietous use of those client devices. The more services registered with the persistence cloud service, the better the protection provided, as any registered service could report suspicious device activity to the system to be shared with the other registered services. Ideally, the services registered with the persistence cloud service may include some type of anti-theft service that could inform other services of the loss or theft of a device prior to the next use of their services by that device. Use of this system may even be useful in locating a lost or stolen client device and/or its perpetrator, as usage of the client device could potentially be tracked by the persistence cloud service. In this scenario, the more services registered with the persistence cloud service, the more thorough the tracking of the device. Another service that would be useful if registered with the persistence cloud service is a data backup service. If, for example, a client device has been reported as lost or stolen, a registered data backup service that may be associated with the client device may potentially be triggered to perform an unscheduled backup of the device, if the device is detected, such that data is backed up prior to a perpetrator attempting to wipe the device clean.

Another advantage of the PCS system is in its enterprise usages. A company may keep track of the user devices that it issues to its employees by, for example, the MAC address of each device or some other hardware identification. In the affiliate policy provided to the persistence cloud service for each of its devices, specific instructions can be provided as to what should happen to each device given any potential breach of security reported by the system. For example, if the device has been reported as lost or stolen, a data backup and/or data wipe of the device may be triggered to minimize any data loss or breach. In another example, the policy may provide instructions as to what level of access a specific device should have. If an employee of the company is a manager or a systems administrator or one having some key role in the company, that person's device may be allowed more extensive access to the company's systems and settings than other employees. Many other advantages and uses are also contemplated.

## Claims

1. A method (500) of providing a persistence cloud service, PCS, to registered services, comprising:
receiving (555), by a PCS server (502), from a first computing device (504-2) associated with a first service registered with the persistence cloud service, a client device update for a client device (506) registered with the persistence cloud service, wherein the update indicates that the client device (506) has had suspicious login activity, wherein a suspicious login activity indicates that the login procedure by a user of the client device (506) into the first service took multiple incorrect passwords;
updating (552), by the PCS server (502), client device persistence information (442) associated with the client device (506) based on the client device update, wherein the client device persistence information (442) includes an indication that activity at the client device (506) is suspicious;
receiving (550), by the PCS server (502), from a second computing device (504-1) associated with a second service registered with the persistence cloud service, a request for the client device persistence information (442), wherein the request includes an affiliate identifier that identifies the second service;
verifying, by the PCS server (502) and based on the provided affiliate identifier, that the second service is registered with the persistence cloud service, PCS, and
providing (554), by the PCS server (502), the client device persistence information (442) to the second computing device (504-1);
determining (556), by the second computing device (504-1), a level of service to be provided to the client device (506) that is based on the client device persistence information (442) provided by the PCS server (502), wherein the level of service includes invoking further security actions, and wherein invoking further security actions includes locking the client device (506); and
providing (558), by the second computing device (504-1), the determined level of service to the client device (506).

## Patentansprüche

1. Verfahren (500) zum Bereitstellen eines persistenten Clouddienstes, PCS, für registrierte Dienste, das Folgendes umfasst:
Empfangen (555) einer Clientvorrichtungsaktualisierung für eine Clientvorrichtung (506), die beim persistenten Clouddienst registriert ist, durch einen PCS-Server (502) von einer ersten Datenverarbeitungsvorrichtung (504-2), wobei die Aktualisierung anzeigt, dass die Clientvorrichtung (506) eine verdächtige Anmeldeaktivität aufwies, wobei eine verdächtige Anmeldeaktivität anzeigt, dass die Anmeldeprozedur durch einen Benutzer der Clientvorrichtung (506) beim ersten Dienst mehrere falsche Passwörter erhielt;
Aktualisieren (552) von Clientvorrichtungspersistenzinformationen (442), die mit dem Clientdienst (506) verknüpft sind, durch den PCS-Server (502) auf Basis der Clientvorrichtungsaktualisierung, wobei die Clientvorrichtungspersistenzinformationen (442) eine Anzeige, dass eine Aktivität an der Clientvorrichtung (506) verdächtig ist, beinhalten;
Empfangen (550) einer Anforderung der Clientvorrichtungspersistenzinformationen (442) durch den PCS-Server (502) von einer zweiten Datenverarbeitungsvorrichtung (504-1), die mit einem zweiten Dienst verknüpft ist, der beim persistenten Clouddienst registriert ist, wobei die Anforderung eine Partnerkennung beinhaltet, die den Clouddienst identifiziert;
Verifizieren durch den PCS-Server (502) und auf Basis der bereitgestellten Partnerkennung, dass der zweite Dienst beim persistenten Clouddienst, PCS, registriert ist, und
Bereitstellen (554) der Clientvorrichtungspersistenzinformationen (442) durch den PCS-Server (502) für die zweite Datenverarbeitungsvorrichtung (504-1);
Bestimmen (556) eines Dienstniveaus, das der Clientvorrichtung (506) bereitzustellen ist und auf den Clientvorrichtungspersistenzinformationen (442), die vom PCS-Server (502) bereitgestellt werden, basiert, durch die zweite Datenverarbeitungsvorrichtung (504-1), wobei das Dienstniveau das Aufrufen von weiteren Sicherheitsaktionen beinhaltet und wobei das Aufrufen von weiteren Sicherheitsaktionen das Sperren der Clientvorrichtung (506) beinhaltet; und
Bereitstellen (558) des bestimmten Dienstniveaus durch die zweite Datenverarbeitungsvorrichtung (504-1) für die Clientvorrichtung (506).

## Revendications

1. Procédé (500) de fourniture d'un service infonuagique de persistance (PCS) à des services enregistrés, consistant :
à recevoir (555), au moyen d'un serveur de service PCS (502) en provenance d'un premier dispositif informatique (504-2) associé à un premier service enregistré avec le service infonuagique de persistance, une mise à jour de dispositif client pour un dispositif client (506) enregistré avec le service infonuagique de persistance, dans lequel la mise à jour indique que le dispositif client (506) avait eu une activité d'ouverture de session suspecte, dans lequel l'activité d'ouverture de session suspecte indique que la procédure d'ouverture de session par un utilisateur du dispositif client (506) dans le premier service a pris de multiples mots de passe incorrects ;
à mettre à jour (522), au moyen du serveur de service PCS (502), des informations de persistance de dispositif client (442) associées au dispositif client (506) en se basant sur la mise à jour de dispositif client, dans lequel les informations de persistance de dispositif client (442) comportent une indication qu'une activité au niveau du dispositif client (506) est suspecte ;
à recevoir (550), au moyen du serveur de service PCS (502), en provenance d'un second dispositif informatique (504-1) associé à un second service enregistré avec le service infonuagique de persistance, une demande d'informations de persistance de dispositif client (442), dans lequel la demande comprend un identifiant d'affilié qui identifie le second service ;
à vérifier, au moyen du serveur de service PCS (502) et en se basant sur l'identifiant d'affilié fourni, que le second service est enregistré avec le service infonuagique de persistance (PCS), et
à fournir (554), au moyen du serveur de service PCS (502), les informations de persistance de dispositif client (442) au second dispositif informatique (504-1) ;
à déterminer (556), au moyen du second dispositif informatique (504-1), un niveau de service à fournir au dispositif client (506) qui est basé sur les informations de persistance de dispositif client (442) fournies par le serveur de service PCS (502), dans lequel le niveau de service comprend l'invocation d'actions de sécurité supplémentaires et dans lequel l'invocation d'actions de sécurité supplémentaires comprend le verrouillage du dispositif client (506) ; et
à fournir (558) au moyen du second dispositif informatique (504-1), le niveau de service déterminé au dispositif client (506).
